# EUROPEAN PATENT SPECIFICATION

(11) **EP 0 343 612 B1**
(45) Date of publication and mention of the grant of the patent: **23.03.1994**
(21) Application number: 89109294.2
(22) Date of filing: 23.05.1989
(51) Int. Cl.: B65G 17/34, B65G 43/08, B65G 47/08

(54) **Method and devices for controlling the unloading of the items in an automatic sorting plant**
Verfahren und Vorrichtung für die Entladekontrolle von Gegenständen bei einer automatischen Sortiervorrichtung
Méthode et dispositif de contrôle du déchargement d'objets dans un poste de triage automatique

(30) Priority: 23.05.1988 IT 2069688
(43) Date of publication of application: 29.11.1989
(73) Proprietor: Canziani, Francesco, I-21010 San Macario (Varese) (IT)
(72) Inventor: Canziani, Francesco, I-21010 San Macario (Varese) (IT)
(74) Representative: Magenbauer, Rudolf, Dipl.-Ing.

(56) References cited:
- WO-A-80/01903
- FR-A- 2 528 402
- GB-A- 1 246 794
- GB-A- 2 111 933

## Description

The invention relates to a method and relevant devices for controlling the unloading operations in sorting plants of the kind employed where considerable amount of items should be treated, e.g. in post offices, in mail order companies and the like.

These are plants where the different functions are carried out and synchronized by a central computer that controls the course of the operations.

A standard plant of this type comprises a fixed path along which run a plurality of carriages or "units" on which the items to be sorted are laid; the latter are automatically unloaded when the relevant carriage passes before a determined collecting area when the item is being introduced in the apparatus, by means of computer controlled and actuated devices.

Plants of this kind are described in the following Italian patents and/or applications by the same Applicant:
Pat.No. 1 152 067; Pat.No. 1 151 648; Ut.Model No. 180 770; Applns. Nos. 22476 C/83, 21310 B/85, 24227 B/85, 25859 A/81, 21774 B/82, 23110 A/84, 22264 A/84 and 20779 A/85. Each item is coded by an operator and placed on the sorting circuit in loading stations the number of which varies in function of the amount of items to be sorted.

Along said circuit, that may develop according to various shapes and sizes, runs a train of units that occupy either the whole path or just a part thereof.

The units are set in motion - according to methods known in the prior art - for instance by means of a continuous driving chain (when the path is substantially a rectilinear one) or by means of electric motors set on board of the units themselves and fed by power bars parallel to the path (when the path is a carrousel).

The items, conveyed by the units, reach the collecting stations where they are unloaded. The unloading is effected by means of movable belts that constitute the loading surface of the units. At the moment of unloading, the unit belt is actuated by sending tension to the relevant motor by means of bus bars (different from the power bars and sectioned in correspondence of the unloading stations) in order to enable the drive control of the only belt-unit that is involved in the unloading.

The unloading may take place at either side of the sorting path by simply reversing the sense of rotation of the belt, whose direction of rotation is perpendicular to the unit motion.

GB-A-2 111 933 discloses a sorting plant comprising carriages, each provided with a rotatable belt which is actuated to discharge the carried items, in which the belt is rotated at a preselected unloading speed to discharge the item. The preamble of claims 1 and 5 are based on this document.

An object of the present method is that of increasing the precision and the reliability of this kind of sorting plants in order to increase their precision during unloading.

The invention method is the method according to claim 1. The invention plant is the plant according to claim 5.

An embodiment of the invention method concerns the control of both the speed and the unloading trajectories in order to get all the items that are to be sorted to move as constantly as possible with respect to different speeds of the unit train.

The invention will be now described in detail with reference to the following drawings, in which:
- Fig.1 is a block diagram of the actuating devices that enable the control of trajectories during unloading;
- Fig.2 shows the graphs of the acceleration to which the items are being subjected during unloading;
- Figgs. 3a-3c show the unloading trajectories of the items in the collecting stations;
- Fig.4 is a block diagram of the drive control devices of the belt during unloading, in function of the machine speed;
- Figgs. 5a-5c show the flow diagrams relevant to the functions carried out according to the subject method.

The items handled by a sorting plant have, to a certain extent, different sizes and masses. The prior art methods for discharging the items from the units do not take this into account, whether they are based on unloading by gravitational force, (e.g. tiltable plate units) nor when the unit has a loading surface consisting of a movable belt. These methods just synchronize unloading with the coding given to the item, making it necessary, thus, to employ collecting mouths greater than the traditionally used ones, in order to ensure that unloading takes place to the proper station.

According to the present method, instead, the unloading trajectories are controlled in function of the mass of the single items.

What is requisite is to act upon the acceleration of the unit belt during unloading, so as to obtain a course of speed as constant as possible, from the condition where the item has minimum mass (referable to the smallest item) to the condition of the maximum allowed mass.

In fact, should the unit belt be subjected to the same acceleration apart from the mass it conveys, the unloading trajectories become constant and predictable, which is all the more significant if one considers that there are good chances for the item to arrive at the unloading zone at the centre of the unit.

The main advantages of this invention consist in the possibility of setting up contiguous and relatively small size unloading stations without this giving rise to any sorting errors and, consequently, to any hand rectification interventions.

It should be pointed out that during operation both the weight and the sizes of the items are detected, by known means, and the relevant data are sent to the computer that controls the whole apparatus.

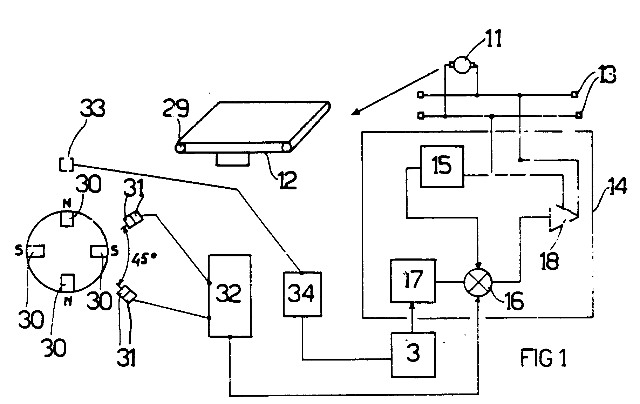

With reference to Fig. 1, the control of the unloading trajectories may be described in this manner. On the roll 29, that represents the idle roller or the idler of the unit unloading belt, there are four permanent magnets 30, e.g. or the cobalt or alnico type, having a high magnetization degree. Said magnets are set along the periphery of the roller at 90° to each other, so that the magnetic polarities (N=north and S=south) alternate.

As roller 29 rotates along with the belt-unit, there occurs a variation in the magnetic flow produced by magnets 30, which is detected by the unit sensors 31.

These are, for instance, Hall sensors that, in function of the flow variation and therefore of the speed of the belt-unit, generate an electric signal that is sent to amplifier 32.

From amplifier 32 the signal is sent to the node 16 of drive control 14, which node will compare said signal to that of the ramp generator 17.

As happened during the transit of the item on the unit, drive control 14 controls the tension with which motor 11 should be fed to obtain a constant acceleration of belt 12 for all the unloaded articles.

For instance, should the unit be carrying an item having a considerable mass, the belt would be somewhat hindered in its motion.

At node 16 would thus arrive a signal different than that of generator 17, as belt 12 (and therefore roller 29) has a lower acceleration than that foreseeen.

Drive control 14, by means of amplifier 18 and feedback 15, would then increase the feeding tension of motor 11 until a correspondence between the signal of generator 17 and that of sensors 31 is reached.

In Fig. 1 are indicated, just by way of example, four Hall sensors arranged two by two, so as to have 16 impulses available for each complete revolution of the roller, and therefore an acceptable solution.

Sensors 31, moreover, are arranged as to form a 45° angle, corresponding to a phase shift of 90° of the magnet-generated signals.

The same magnets 30 are further employed to test the proper working of the belt-unit.

To this end, there is used another Hall sensor 33, set on the ground near the path along which the units run.

The signal dected by sensor 33 is sent to device 34 that converts said signal, of impelling kind, into a signal that is function of the speed of the belt-unit.

The speed value is sent from converter 34 to computer 3, that checks that said value correspond to determined parameters.

By this test it is possible to locate those units that, owing to a failure, are not in a position to carry out the unloading; they are left out of the sorting operations and subjected to repair. The same test also allows to set off an alarm in the case of an item being particularly heavy and not being unloaded: the belt-unit would tend to slip on the driven roller.

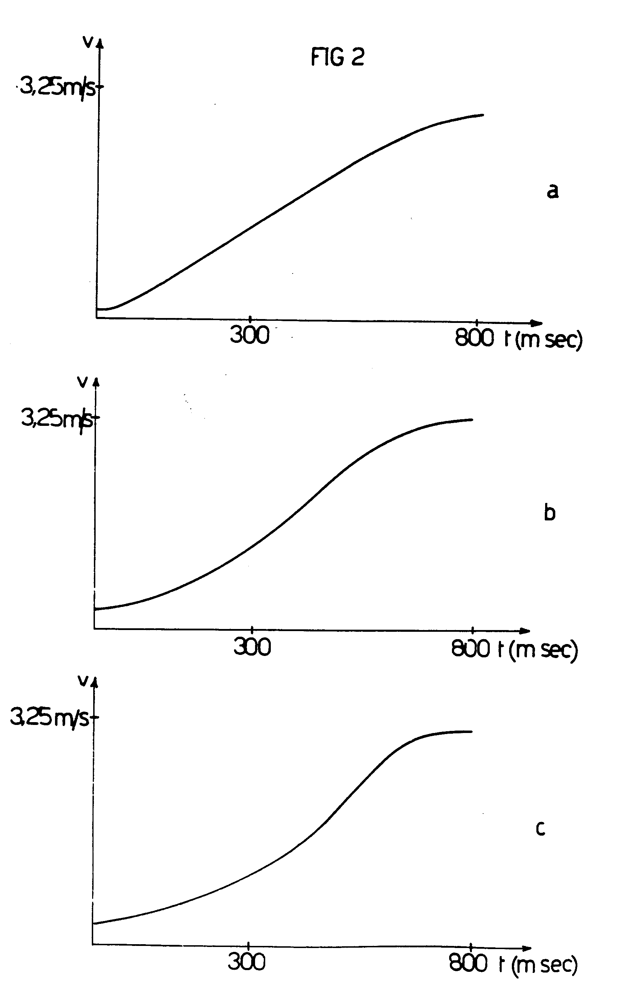

As proof of the actual importance of the invention, Fig. 2 shows the trend of the belt acceleration in respect of three different working conditions.

The curves of Fig. 2 were detected under real working conditions.

The data shared by the three curves are as follows: the belt actuation time (800 m/sec); the final speed of the belt (3.25 m/s); the instant when the items are being unloaded (after 300 m/sec from actuation).

The most significant part of the curve is therefore the one comprised in the initial 300 m/sec during which the unloading takes place.
Curves A, B and C refer to the unit being unloaded, to the unit being loaded with 5 Kg. and to the unit being loaded with 10 Kg, respectively.

By comparing the three curves over the first 300 m/sec, the increase in speed turns out to be the same in the three cases. It means that any item ranging between null mass and 10 Kg mass is subject to the same acceleration, which results in the discharge speed and trajectories being constant and therefore calculable with precision.

The part of the curve comprised between 300 and 800 m/sec shows on the contrary a different trend in each single case; in fact, in the A condition the belt always revolves unloaded and therefore there is a constant increase in speed over 800 m/sec, whilst both in the B and in the C conditions the curves show a pitch after 300 m/sec, after the item has been unloaded and the belt runs without any load.

Figgs. 3a and 3b show the unloading trajectories, respectively, of a small size item (5 cm side) and of an item whose sizes may be compared to those of the loading surface of the unit, trajectories that are obtained by a computer simulation of a real situation.

In the same Figures are set out the details relating to the unloading simulation, the acceleration given by the belt-unit to the item being equal to 14.8 m/s², for either representation.

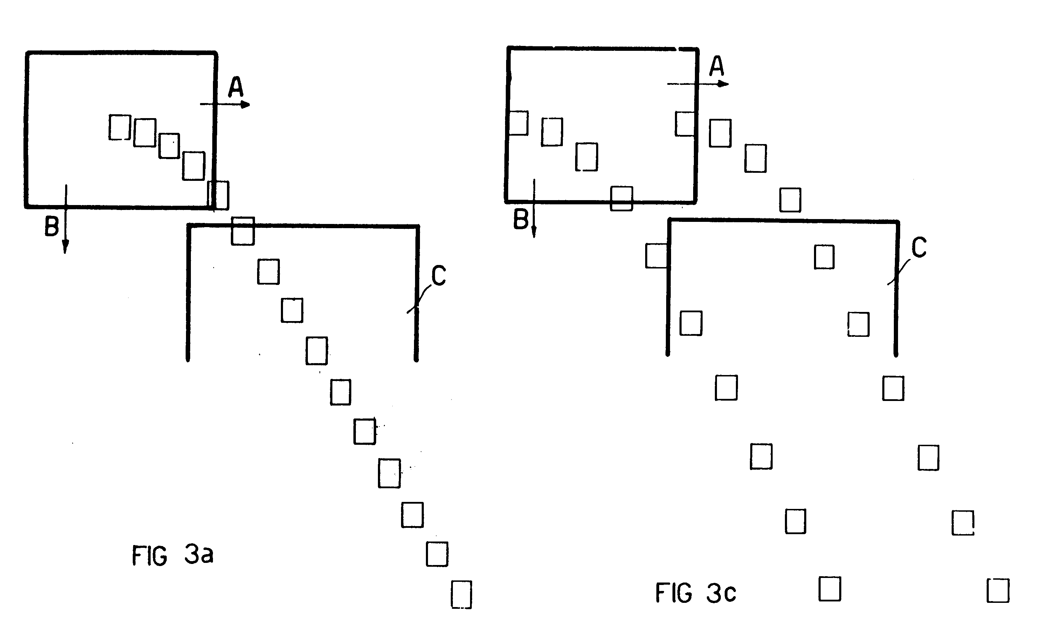

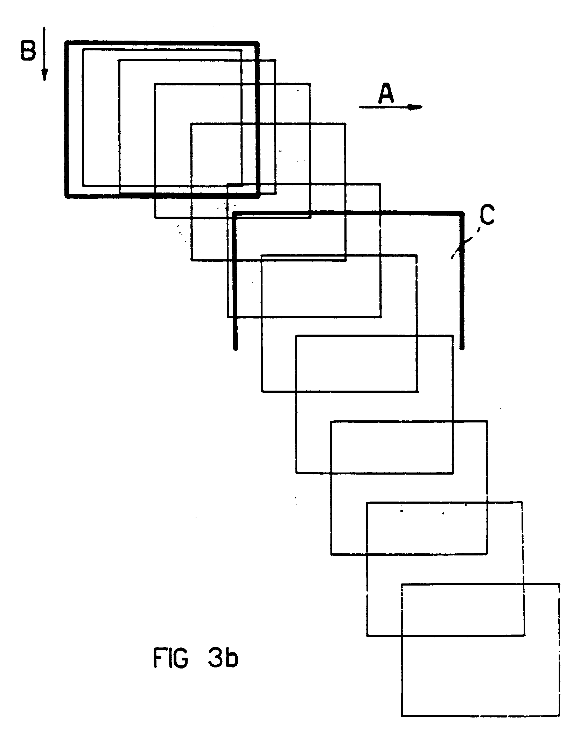

The constant trend of the trajectories will be apparent if one considers (see Fig.3) that the largest size item seems not to get perfectly into the collecting station owing to the fact that the unit motion cannot be shown in the drawing.

Fig. 3c shows the trend of the trajectories in respect of a small size item that occupies two extreme positions on the unit. In this case too the acceleration value is equal to 14.8 m/s² and the constant unloading trajectories make it possible to unload the item exaclty to the relative collecting station.

As in Fig.3b, there is no evidence of the unit motion, which gives one the impression that the item on the left side of the unit would not get into the collecting mouth.

Another advantage of the present method lies in the possibility of unloading the items even when the sorting plant does not work at rating speed.

The units of the sorting plant are handled from the rest position to a working speed that is kept constant as the operations are being carried out. Said operations do not start until reaching the working speed, in the relatively short time of 15-20 sec. It may occur that, due to an emergency or a failure, the plant be deactivated after the units have been loaded and, once the emergency has ceased or the failure has been repaired, the plant be started again.

The time necessary for recovering the working speed is equal to the already cited one, but in this case it is relatively long, as it is possible that the already loaded items reach in the meantime the unloading stations.

It is thus necessary to bring the suspended operations to an end, without this affecting in the least the sorting precision.
According to the prior art, this drawback is usually obviated by discarding those items that reach the unloading stations before the plant works at normal speed rate.

The discarded items will then be put again in the sorting circuit following the customary loading operations.

On the contrary, the invention method makes it possible to actuate the unit belt in a variable manner, in function of the speed of the unit train. This is very important as a momentary stoppage of the plant does not involve any repetition of already effected operations, but the sorting precision and reliablity are ensured.

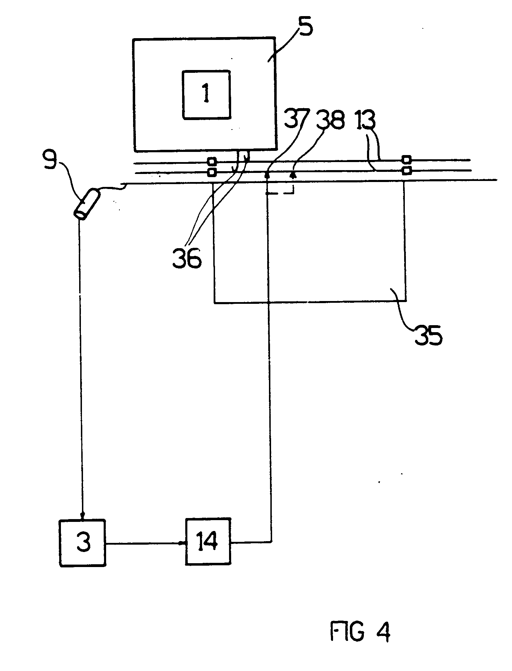

Fig. 4 shows a unit 5 in the proximity of an unloading station 35 where item 1 should be unloaded. According to what above said, the unloading takes place by providing with tensions the bars 13, from which the belt-unit motor is fed through sliding contacts 36.

When the unit speed is lower than the working speed (e.g. owing to a momentary stoppage) the method according to the invention allows to carry out the unloading all the same, in the following way.

The central computer 3 receives from main encoder 9 a seguence of impulses according to the unit speed, e.g. lower than the working speed. The computer compares then the speed value with the data inserted in its program and establishes that the motor of the belt-unit should be actuated by a certain delay.

Said delay causes tension to be sent to bars 13, through the drive control 14, when unit 5, and therefore sliding contacts 36, are in a more advanced position that they are usually.

It ensues that, if at working speed conditions the drive control 14 acts as the first sliding contact 36 is in correspondence of point 37, at lower speed conditions the same drive control will send tension to bars 13 when said sliding contact is in a more advanced position, e.g. at (point) 38.

In consideration of the lesser speed of the units, this delayed actuation allows to obtain a predictable unloading trajectory and, accordingly, the unloading precision provided by the present method.

### 8. FLOW DIAGRAMS

Figgs. 5a-5c show the flow diagrams relevant to the main functions carried out by the sorting plant which is the subject of the present method.

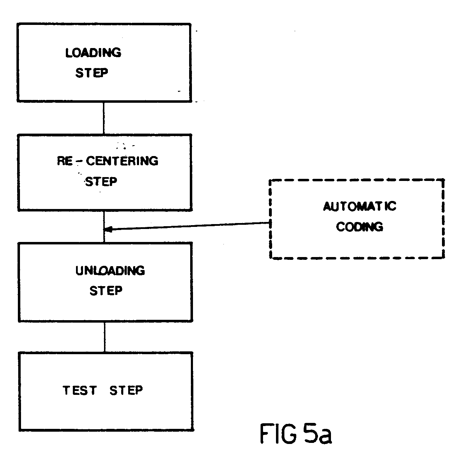

Fig. 5a refers to the main functions of the present method, namely the sequence of the loading, repositioning at the unit centre and unloading of the articles to be sorted, as well as the test for checking the proper working of the unit belts.

The "automatic coding" diagram indicates the possibility of avoiding the coding operations carried out by the operator, which is otainable by providing the plant with an automatic code reader or scanner (e.g. post code or bar code) placed before the unloading area.

In this way the scanner would automatically scan the destination of the items and would provide the central computer with the necessary data for the unloading.

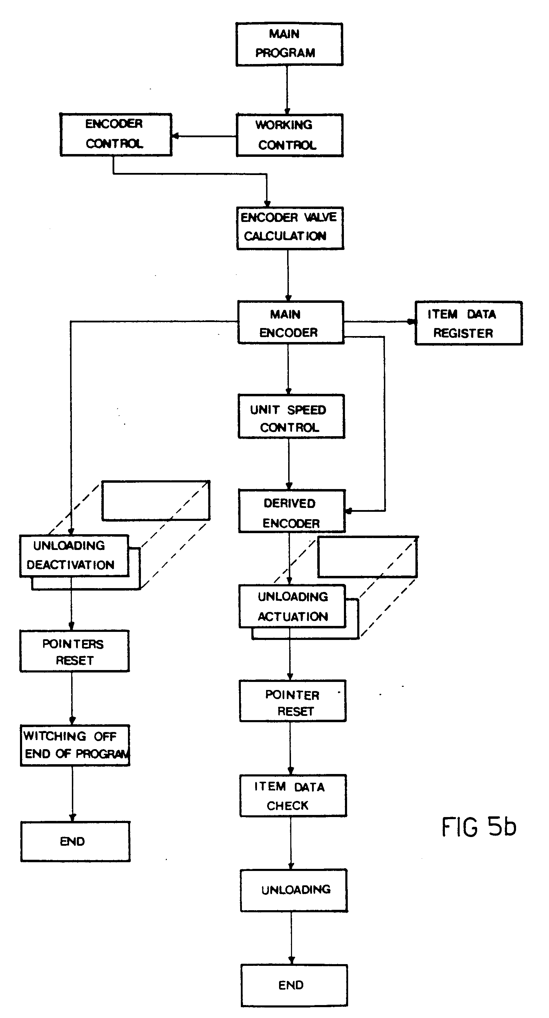

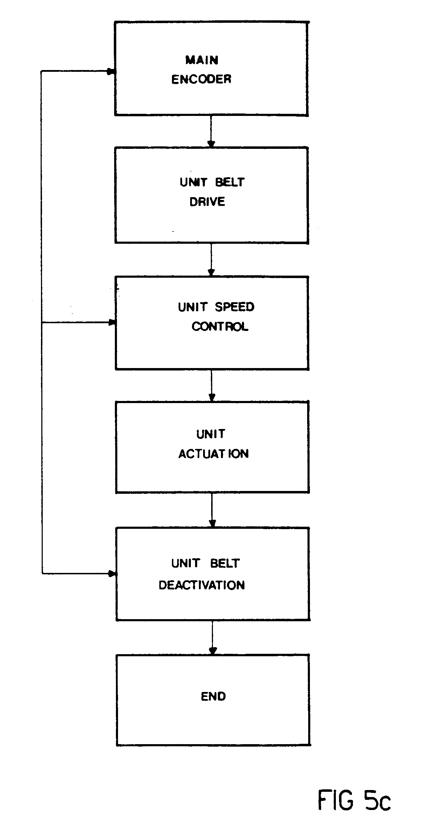

Fig. 5b refers to the control of the main encoder, and to the unloading stage of the items.

The main encoder is handled by four main blocks, namely a main program, the control program for a proper working of the plant, the handling program and the encoder value computing program.

The main encoder, in turn, sorts the tasks to be carried out in function of the encoder value, and updates the item data on the suitable shift register. The "unit speed control" represents the computing of the unit speed each time the unloading should be actuated. At this stage the item is unloaded, by means of the impulses of a fictitious encoder, impulses derived from the main encoder in function of the unit speed.

By means of the pointers reset (a register or item data index that locates the unit that is to perform the unloading) and the data control (destination, weight and sizes) the item is unloaded by sending tension to the bars that feed the motor of the belt-unit.

Once the item has been unloaded, the main encoder deactivates the unloading device, resets the pointers and takes tension off the a.m. bus bars.

Fig. 5c refers to the carrying out of the test on the proper working of units.

Under the control of the main encoder the unit belt is actuated, and the accurancy speed is feedback controlled. The thus tested unit is either enabled or disabled in function of the result of the previous control: actually, this means that a failure - if any - would cause the unit not to be utilized.

The operation ends as soon as the motor of the belt-unit has been turned off.

## Claims

1. Method for controlling the unloading functions for the items to be sorted in sorting plants, said method being of the kind wherein the item to be sorted is placed on a carriage or unit that runs along a fixed path and is provided with a revolving belt (12) that moves orthogonally to the direction of feed at a controlled unloading speed in order to carry out the unloading, characterized by the fact that, during the unloading stage, one acts upon the acceleration imparted to the revolving belt, also called unit belt (12) in order to control the trajectory and the velocity of the unloaded items in function of their mass.

2. Method according to claim 1, according to which the speed of rotation of the belt (12) is detected instant by instant through electric transductors; the signal generated by said transductors (30,31) is compared to a reference signal; and the feed of the motor means (11) that makes said belt rotate is conveniently acted upon.

3. Method according to claim 1, characterized by the fact that the speed of rotation of the unloading belts is correlated with the forward speed of the units.

4. A method according to claim 3, wherein the forward speed of the units is detected by a transductor capable of generating a sequence or electric impulses in function of said speed, and is then compared to pre-determined reference parameters, and wherein the feed of the drive motors (11) of the unit belts (12) is acted upon, on the basis of the obtained result, in order to adjust the unloading speed of the items to the forward speed of the units.

5. A plant to carry out the method according to claims 1,2, characterized by a plurality of magnets (30) secured to one of the idlers of the unloading belt (12) as well as a plurality of sensors (31) secured to the unit and suitable to detect the variations in the magnetic flux following the rotation of said idler in order to generate an electric signal, means (32,14,17) for comparing said electric signal to a reference signal and for varying the feed of the drive motor (11) of the said unloading belt conveyor (12) as a function of the result of the comparison step, and means for acting upon the acceleration imparted to the unloading belt (12) in order to control the trajectory and the velocity of the unloaded items in function of their mass.

6. A plant according to claim 5, characterized by the fact of providing a further sensor (33) for controlling the revolution of the support roller of the unloading belt.

## Patentansprüche

1. Verfahren zur Steuerung der Entladefunktionen für die zu sortierenden Gegenstände in Sortiervorrichtungen, welches Verfahren darin besteht, daß der zu sortierende Gegenstand auf einen Schlitten aufgesetzt wird, der entlang einer feststehenden Bahn beweglich und mit einem umlaufenden Band oder Riemen (12) versehen ist, das bzw. der sich rechtwinklig zur Vorlaufbewegung des Schlittens bewegt mit einer gesteuerten Entladegeschwindigkeit, um auf diese Weise die Entladung auszuführen, dadurch gekennzeichnet, daß während des Entladestadiums auf die dem auch Bandeinheit (12) genannten umlaufenden Band erteilte Beschleunigung eingewirkt wird, um die Bahn und die Geschwindigkeit der entladenen Gegenstände in Abhängigkeit von deren Masse zu bestimmen und zu steuern.

2. Verfahren nach Anspruch 1, bei dem die Umlaufgeschwindigkeit des Bandes oder Riemens (12) Augenblick für Augenblick mit Hilfe von elektrischen Umwandlern ermittelt wird, daß das von diesen Umwandlern (30,31) erzeugte Signal mit einem Referenzsignal verglichen wird und daß die Geschwindigkeit des Antriebs (11), der das Band oder den Riemen in Drehung versetzt, in geeigneter Weise beeinflußt wird.

3. Verfahren nach Anspruch 1, dadurch gekennzeichnet, daß die Umlaufgeschwindigkeit der Entladebänder mit der Vorlaufgeschwindigkeit der Einheiten in Wechselbeziehung gebracht wird.

4. Verfahren nach Anspruch 3, dadurch gekennzeichnet, daß die Vorlaufgeschwindigkeit der Einheiten mit Hilfe eines Umwandlers ermittelt wird, der in der Lage ist, eine Reihenfolge von elektrischen Impulsen in Abhängigkeit von der oben genannten Geschwindigkeit zu erzeugen und daß diese Geschwindigkeit sodann mit vorbestimmten Referenz-Parametern verglichen wird und daß auf die Antriebsgeschwindigkeit der Antriebsmotoren (11) der Bandeinheiten (12) auf der Grundlage des erzielten Ergebnisses eingewirkt wird, um auf diese Weise die Entladegeschwindigkeit der Gegenstände mit der Vorlaufgeschwindigkeit der Einheiten anzupassen.

5. Eine Einrichtung zur Ausführung des Verfahrens nach Anspruch 1 oder 2, dadurch gekennzeichnet, daß eine Mehrzahl von Magneten (30) vorgesehen ist, die mit einer der Bandrollen des Entladebandes (12) wie mit einer Mehrzahl von an der Einheit angebrachten Sensoren (31) verbunden ist und die geeignet ist, die Variationen des magnetischen Flusses als Folge der Drehbewegung der vorgenannten Spannrolle zu ermitteln, um ein elektrisches Signal zu erzeugen, daß Mittel (32,14,17) zum Vergleichen dieses elektrischen Signals mit einem Referenzsignal und zur Veränderung der Speisung des Antriebsmotors (11) des Entladebandes (12) in Abhängigkeit von dem Ergebnis des Vergleichs vorgesehen sind, und daß Mittel zum Einwirken auf die Beschleunigung, die dem Entladeband (12) erteilt wird, vorgesehen sind, um die Bahn und die Geschwindigkeit der entladenen Gegenstände in Abhängigkeit von ihrer Masse zu steuern und zu kontrollieren.

6. Anlage nach Anspruch 5, dadurch gekennzeichnet, daß ein weiterer Sensor (33) vorgesehen ist, um die Umlaufbewegung der Tragrolle des Entladebandes zu steuern.

## Revendications

1. Procédé de commande des fonctions de déchargement pour les éléments à trier dans des ateliers de tri, ledit procédé étant du type dans lequel l'élément à trier est placé sur un chariot ou une unité qui se déplace le long d'un trajet fixe et est pourvu d'une bande tournante (12) qui se déplace orthogonalement à la direction d'alimentation à une vitesse de déchargement commandée afin d'effectuer le déchargement, caractérisé par le fait que, pendant l'étape de déchargement, on agit sur l'accélération communiquée à la bande tournante, appelée aussi bande de l'unité (12) afin de commander la trajectoire et la vitesse des éléments déchargés en fonction de leur masse.

2. Procédé selon la revendication 1, selon lequel la vitesse de rotation de la bande (12) est détectée instant par instant au moyen de transducteurs électriques; le signal engendré par lesdits transducteurs (30, 31) est comparé à un signal de référence; et l'alimentation du moyen moteur (11) qui fait tourner ladite bande est influencée de façon appropriée.

3. Procédé selon la revendication 1, caractérisé par le fait que la vitesse de rotation des bandes de déchargement est corrélée avec la vitesse directe des unités.

4. Un procédé selon la revendication 3 dans lequel la vitesse directe des unités est détectée par un transducteur susceptible d'engendrer une séquence d'impulsions électriques en fonction de ladite vitesse et est ensuite comparée à des paramètres prédéterminés de référence, et dans lequel l'alimentation des moteurs d'entraînement (11) des bandes d'unités (12) est influencée, sur la base du résultat obtenu, afin d'ajuster la vitesse de déchargement des éléments à la vitesse directe des unités.

5. Un atelier de mise en oeuvre du procédé selon les revendications 1 ou 2, caractérisé par une série d'aimants (30) fixés à l'un des galets tendeurs de la bande de déchargement (12) et par une série de capteurs (31) fixés à l'unité et susceptibles de détecter les variations du flux magnétique à la suite de la rotation dudit galet tendeur afin d'engendrer un signal électrique, des moyens (32, 14, 47) servant à comparer ledit signal électrique à un signal de référence et à foire varier l'alimentation du moteur d'entraînement (11) de ladite bande transporteuse (13) de déchargement en fonction du résultat de l'étape de comparaison, et un moyen d'action sur l'accélération communiquée à la bande de déchargement (12) afin de commander la trajectoire de la vitesse des éléments déchargés en fonction de leur masse.

6. Un atelier selon la revendication 5, caractérisé par le fait qu'il est prévu un autre capteur (33) pour commander la rotation du rouleau de support de la bande de déchargement.
